(19) **Europäisches Patentamt**

**European Patent Office**

**Office européen des brevets**

(11) **EP 1 323 675 A1**

(12) **EUROPEAN PATENT APPLICATION**

(43) Date of publication:
**02.07.2003 Bulletin 2003/27**

(51) Int Cl.7: **C01G 23/00**, B01J 35/06,
B01J 35/00

(21) Application number: **02258813.1**

(22) Date of filing: **20.12.2002**

| | |
|---|---|
| (84) Designated Contracting States:<br>**AT BE BG CH CY CZ DE DK EE ES FI FR GB GR IE IT LI LU MC NL PT SE SI SK TR**<br>Designated Extension States:<br>**AL LT LV MK RO** | (72) Inventors:<br>• **Domen, Kazunari**<br>  **Sagamihara-shi, Kanagawa (JP)**<br>• **Sakatani, Yoshiaki**<br>  **Niihama-shi, Ehime (JP)** |
| (30) Priority: **26.12.2001 JP 2001393680** | (74) Representative: **Cresswell, Thomas Anthony**<br>**J.A. KEMP & CO.**<br>**14 South Square**<br>**Gray's Inn**<br>**London WC1R 5JJ (GB)** |
| (71) Applicant: **Sumitomo Chemical Company, Limited**<br>**Chuo-ku Osaka 541-8550 (JP)** | |

(54) **Titanium oxide and photocatalyst and photocatalyst coating composition using the same**

(57) A titanium oxide showing sufficiently high photocatalytic activities by irradiation of visible light is provided. The titanium oxide comprises a metal element selected from the group IIa elements, group IIb elements and lanthanoids, and has (i) an X-ray photoelectron spectrum (XPS) which has a peak at a binding energy within the range of from 458 eV to 460 eV and (ii) index X (= B/A) of about 0.98 or less, wherein A and B stand for half-widths of peaks at binding energies in 458-460 eV in the integrated spectra obtained by integrating the first and second XPS spectra and the seventh and eighth XPS spectra, respectively, which are obtained from eight-time XPS measurements of the titanium oxide.

EP 1 323 675 A1

## Description

FIELD OF THE INVENTION

The present invention relates to a titanium oxide, to a photocatalyst using the titanium oxide and to a photocatalyst coating composition using the titanium oxide.

BACKGROUND OF THE INVENTION

Ultraviolet irradiation to a semiconductor generates electrons having a strong reduction activity and positive holes having a strong oxidation activity, to decompose a molecular species that comes in contact with the semiconductor by an oxidation-reduction activity. Such an activity is called a photocatalytic activity. By the photocatalytic activity, bad-smelling substances in a living space are decomposed and removed, environmental pollution substances such as organic solvents, organic halides and surfactants in water are decomposes and removed. Further, in the application of the photocatalytic activity, it is attempted to produce hydrogen and oxygen by decomposing water.

As a substance showing the photocatalytic activity, titanium oxide is attracting much attention and photocatalysts made of titanium oxide are in the market. The photocatalysts made of titanium oxide available in the present market show a photocatalytic activity to some extent when irradiated with ultraviolet light, but show an insufficient photocatalytic activity when irradiated with visible light. That is, the photocatalysts in the market have problems such that it is difficult to bad-smelling substances or the like are decomposed and removed in an indoor living space with no ultraviolet light. On the other hand, regarding water decomposition, a titanium oxide with sufficiently high photocatalytic activities is needed since it has advantages in utilizing solar rays, effectively. Therefore, a titanium oxide that shows sufficiently high photocatalytic activities by irradiation of visible light is demanded.

SUMMARY OF THE INVENTION

The objects of the present invention are to provide a titanium oxide that shows sufficiently high photocatalytic activities by irradiation of visible light, to provide a photocatalyst using the titanium oxide as a catalyst component and to provide a photocatalyst coating composition using the titanium oxide.

The inventors of the present invention have studied on titanium oxide in order to achieve such objects. As a result, the present inventors have obtained a titanium oxide showing sufficiently high photocatalytic activities by irradiation of visible light, and have completed the present invention.

Thus, the present invention provides a titanium oxide containing a metal element selected from a group consisting of IIa group elements, IIb group elements and lantanoids, and having (i) an X-ray photoelectron spectrum which has a peak at a binding energy within the range of from 458 eV to 460 eV and (ii) index X of about 0.98 or less, the index X being calculated by the equation below:

$$X = B/A$$

wherein A and B stand for respective half-widths of peaks, which are obtained by the process consisting of the steps of:

(1) measuring an X-ray photoelectron spectrum of the titanium oxide eight times while irradiating X-ray,
(2) obtaining a half-width, A, of peak at a binding energy within the range of from 458 eV to 460 eV in the integrated spectrum obtained by integrating the first and second X-ray photoelectron spectra, and
(3) obtaining a half-width, B, of peak at a binding energy within the range of from 458 eV to 460 eV in the integrated spectrum obtained by integrating the seventh and eighth X-ray photoelectron spectra.

The present invention also provides a photocatalyst containing the above-described titanium oxide.
The invention further provides a photocatalyst coating composition comprising the above-described titanium oxide and a solvent.

DETAILED DESCRIPTION OF THE INVENTION

A titanium oxide of the present invention is represented by the chemical formula $TiO_2$ as a main component and contains a metal element other than titanium. The metal element other than titanium, which is contained in the titanium oxide, is an element selected from a group consisting of IIa group elements, IIb group elements and lantanoids. IIa group elements may include calcium, strontium and the like. IIb group elements may include zinc and the like. Lantanoids may include lantane, cerium and the like. The amount of such a metal element contained may be about 0.001 % by mole or more, preferably about 0.01 % by mole or more, and more preferably about 0.05 % by mole or more, in terms of the metal ion based on titanium ion in the titanium oxide. The larger the amount of the metal element is contained, the more preferred the resulting titanium oxide may become. However, a titanium oxide containing too larger amounts of metal element may not show photocatalytic activities corresponding to the amounts, and may show insufficient photocatalytic activities by irradiation of visible light. Therefore, the amount of the metal element contained in the titanium oxide is preferably about 10 % by mole or less, and is more preferably about 5 % by mole or less, in terms of the metal ion based on titanium ion in the titanium oxide.

When a titanium oxide is measured by X-ray photoelectron spectroscopy (hereinafter, sometimes being referred to as "XPS"), an electron state of titanium ion in the titanium oxide is observed in the XPS spectrum. In the present invention, an index obtained from the XPS spectrum is utilized as an index showing an electron state of titanium ion in the titanium oxide.

That is, a titanium oxide of the present invention has (i) an X-ray photoelectron spectrum which has a peak at a binding energy within the range of from 458 eV to 460 eV and (ii) index X of about 0.98 or less, the index X being calculated by the equation below:

$$X = B/A$$

wherein A and B stand for respective half-widths of peaks, which are obtained by the process consisting of the steps of:

(1) measuring an X-ray photoelectron spectrum of the titanium oxide eight times while irradiating X-ray,
(2) obtaining a half-width, A, of peak at a binding energy within the range of from 458 eV to 460 eV with in the integrated spectrum obtained by integrating the first and second X-ray photoelectron spectra, and
(3) obtaining ahalf-width, B, of peak at a binding energy within the range of from 458 eV to 460 eV in the integrated spectrum obtained by integrating the seventh and eighth X-ray photoelectron spectra.

Index X is preferably about 0.95 or less.

The smaller index X becomes, the more easily the state of a binding energy of titanium varies with repeated irradiation of X ray, which means that the circumstance around the titanium ion varies more easily. On the other hand, the larger index X means that the titanium ion is placed under the circumstance which does not vary easily with the irradiation of X ray.

In the present invention, XPS spectra of a titanium oxide may be measured using an X-ray photoelectron spectrometer by carrying out a set of procedures (comprising 3 steps below) four times in total.

1st step : an XPS spectrum within the range of a binding energy of from 448 eV to 474 eV, which shows an electron state of titanium, is measured twice, provided that a period of time per analysis is 60 seconds,

2nd step : an XPS spectrum within a binding energy of from 518 eV to 542 eV, which shows an electron state of oxygen, is measured twice provided that a period of time per analysis is 56 seconds,

3nd step : an XPS spectrum within a binding energy of from 275 eV to 310 eV, which shows an electron state of carbon, is measured twice provided that a period of time per analysis is 80 seconds.

The above set of procedures is conducted four times so that a period of time required between the beginning of the 1st step in the first set and the completion of the 3rd step in the fourth set is within 30 minutes without exposing the titanium oxide in air. The XPS spectra showing an electron state of carbon is used as a standard for determining a peak position in other XPS spectra. The 1st step in the first set of the procedures provides the first and second XPS spectra with respect to the electron state of titanium. Similarly, the 1st steps in the second and third sets of procedures provide the third, fourth, fifth and sixth XPS spectra with respect to the electron state of titanium. Further, the 1st step in the fourth set of procedures provides the seventh and eighth XPS spectra. A half-width of peak in an integrated spectrum in the present invention is obtained from the peak at a binding energy within the range of from 458 eV to 460 eV in the integrated spectrum obtained by integrating the two XPS spectra, each showing the electron state of titanium. Half-width A of peak is obtained from the peak in the integrated spectrum of the first and second XPS spectra, and half-width B of peak is obtained from the peak in the integrated spectrum of the seventh and eighth XPS spectra. Index X of the present invention is calculated as a rate of half-width B to half-width A, i. e. B / A. When two or more peaks are found within the binding energy range of from 458 eV to 460 eV in the integrated spectrum, half-width A and/or B is obtained from the highest peak among them.

A titanium oxide in the present invention may contain nitrogen element. The amount of the nitrogen element may be measured with an elemental analysis. The amount of nitrogen in the titanium oxide may be about 0.0001 % by weight or more, preferably about 0.01 % by weight or more, in terms of nitrogen element based on the titanium oxide. When the amount of nitrogen is too large, the resulting titanium oxide may show insufficient photocatalytic activities by irradiation of visible light. Therefore, the amount of nitrogen may be about 2 % by weight or less, is preferably about 1 % by weight or less, and is more preferably about 0.5 % by weight or less, based on the titanium oxide. The reason why the titanium oxide having a too large amounts of nitrogen may show insufficient photocatalytic activities is not clear, but it may be assumed that the photocatalytic activities are influenced by the generation of a portion having a structure of titanium nitride (TiN) in the titanium oxide due to a chemical bonding between titanium ion and nitrogen ion. Therefore, it is preferred that a titanium oxide in the present invention has no structure of titanium nitride. For example, the titanium oxide in the present invention preferably has an XPS spectrum with no peak at a binding energy of from 395 eV to 398 eV, which shows an electron state (N1s) of nitrogen and seems to show a bonding between titanium ion and nitrogen ion.

A titanium oxide of the present invention may contain an inorganic compound other than titanium oxide as long as the compound does not give adverse effects to photocatalytic activities of the titanium oxide. The titanium oxide containing such an inorganic compound may be obtained by mixing the inorganic compound with the titanium oxide and optionally being heated after the mixing so as to produce a composite product of the resulting mixture. Examples of such other inorganic compounds include silica ($SiO_2$), alumina ($Al_2O_3$), zirconia ($ZrO_2$), magnesia (MgO) and zinc oxide (ZnO), iron oxide ($Fe_2O_3$, $Fe_3O_4$), zeolite, molecular sieve, calcium phosphate and the like.

The titanium oxide in the present invention can be produced, for example, by mixing

(i) a titanium compound,
(ii) a compound containing an element selected from a group consisting of IIa group elements, IIb group elements and lantanoids,
(iii) at least one compound selected from glycols and alcohols and
(iv) a polyhydric carboxylic acid;

and calcining the resulting mixture thereof in the presence of a molecular oxygen and an ammonia. Examples of the titanium compound to be used here include an organic titanium compounds such as a titanium alkoxide (for example, a titanium tetramethoxide, a titanium tetraethoxide, a titanium tetraisopropoxide and the like) and an inorganic titanium compound such as a titanium hydroxide, a titanic acid, a titanium trichloride, a titanium tetrachloride, a titanium tetrabromide, a titanium sulfate, a titanium oxysulfate. Examples of the compound containing an element selected from a group consisting of IIa group elements, IIb group elements and lantanoids include an anhydrous nitrate, a chloride, a sulfate, an acetate, an alkoxide and an oxalate, of the element and the like. Examples of the glycol to be used here include an ethylene glycol, a propylene glycol, a 1,3-butylene glycol, a 1,4-butylene glycol and the like. Examples of the alcohol to be used here include a methyl alcohol, an ethyl alcohol, an isopropyl alcohol and the like. The total amount of the glycol and alcohol to be mixed may be in the range of from 20 parts by mol to 100 parts by mol based on the titanium compound. Examples of the polyhydric carboxylic acid to be used here include citric acid and the like. The amount of the polyhydric carboxylic acid to be mixed may be in the range of from 0.1 part by mol to 20 parts by mol based on the titanium compound.

The above-described mixing may be conducted in a container equipped with a stirrer at a temperature of from 10 °C to 50 °C. The above-described calcining may be conducted in the presence of a molecular oxygen and an ammonia, preferably under the condition where the ammonia concentration is about 0.1 % by volume or more. The calcination temperature may be about 300 °C or higher, preferably about 350 °C or higher, and may be about 600 °C or lower, preferably about 500 °C or lower. When an organic titanium compound is used, the mixture including organic titanium compound may be burned or carbonized before the calcination. Such burning or carbonization may be conducted by heating the mixture at a temperature of from about 400 °C to about 650 °C for, for example, about 0.5 hour to 5 hours.

A photocatalyst in the present invention contains the above-described titanium oxide in the present invention as a catalyst component.

The shape of the photocatalyst is not limited. Examples of the shape include a molded article shape, a fibrous shape, a powdery shape and the like. The molded article of the photocatalyst may be in the shape of a ring, a sheet, a honeycomb or the like. The photocatalyst with a fibrous shape may be long fiber, short fiber or the like. The photocatalyst with a powdery shape may be a powdery article in the shape of sphere, bar, plate, rectangular solid or the like.

The photocatalyst with a ring shape may be obtained by mixing a titanium oxide of the present invention with a molding agent and conducting the extrusion molding of the resulting mixture. The photocatalyst with a long fiber shape may be obtained by mixing a titanium oxide of the present invention with an inorganic polymer or with an organic polymer and spinning the resulting solution. When the photocatalyst is a molded article, the photocatalyst may be obtained using a bonding agent, an antistatic agent, an adsorbent and/or a titanium compound other than the titanium oxide of the present invention as well as an inorganic polymer, an organic polymer or the like. When the photocatalyst has a powdery shape, the photocatalyst may be utilized as it is, or may be utilized after the particle size thereof is controlled by grinding, sieving, classifying or the like, if necessary.

Using a photocatalyst in the present invention, organic compounds such as aldehydes, ketones, organic halides, carboxylic acids and salts may be decomposed with the irradiation of visible light. Such decomposition can be observed, for example, in a method in which the photocatalyst is placed into a visible-light-transmitting container (such as a glass container and a plastic contianer) together with a liquid or gas containing the organic compounds to be treated and then is irradiated with visible light from outside of the container.

The light source for irradiating a visible light is not particularly limited as long as it can emit a visible light having a wavelength of 430 nm or more, preferably a visible light having a wavelength of from 430 nm to 600 nm. Example of the light source include solar rays (sunlight), a fluorescent lamp, a halogen lamp, a xenon lamp, a mercury arc lamp, a light emitting diode, an electro luminescence lamp and the like. If desired, the light source may be equipped with an ultraviolet cut-off filter and/or an infrared cut-off filter. The decomposition reaction may be conducted in a continuous operation or may be conducted in a batch operation.

An irradiation time with visible light is not particularly limited, and may be selected appropriately depending on a strength of light of a light source, and the kind and concentration of a compound to be treated with the photocatalyst.

Also, using a photocatalyst in the present invention, water may be decomposed with the irradiation of visible light, to produce hydrogen and oxygen. For example, oxygen may be produced in a method in which the photocatalyst is suspended in an aqueous solution of silver nitrate and is irradiated with visible light. Hydrogen may be produced in a method in which a platinum is supported on the photocatalyst, which is then suspended in a methanol, and is irradiated with visible light. For the irradiation, any light source as described above may be used, and sunlight is preferred in view of energy supply.

A photocatalyst coating composition in the present invention comprises a titanium oxide of the present invention and a solvent.

The solvent in the photocatalyst coating composition is not particularly limited. Preferred are those which evaporate easily after the applying of the photocatalyst coating composition onto a material. Examples of the solvent include water, alcohols, ketones and acids such as hydrochloric acid, nitric acid and sulfuric acid.

The photocatalyst coating composition may be produced by a method in which a titanium oxide in the present invention is dispersed in the above-described solvent such as water to form a slurry or solution; by a method in which the titanium oxide is peptized in the presence of acid such as hydrochloric acid, nitric acid and sulfuric acid; or the like. When the titanium oxide is dispersed, if desired, a dispersing agent may be used.

As described above, a titanium oxide in the present invention exhibits a superior photocatalytic activity by irradiation of visible light. When irradiated with visible light, the titanium oxide can decompose a variety of organic materials and can produce hydrogen and oxygen from the decomposition of water, due to the superior photocatalytic activity. The photocatalyst coating composition in the present invention makes it possible to easily apply the titanium oxide in the present invention onto a material such as a glass, a ceramics, a metal or a plastic, to provide such a material with a high photocatalytic activity.

The entire disclosure of the Japanese Patent Application No. 2001-393680 filed on December 26, 2001 indicating specification, claims, and summary, are incorporated herein by reference in their entirety.

The invention being thus described, it will be apparent that the same may be varied in many ways. Such variations are to be regarded as within the spirit and scope of the invention, and all such modifications as would be apparent to one skilled in the art are intended to be within the scope of the following claims.

EXAMPLES

The present invention is described in more detail by reference to the following Examples, which should not be construed as a limitation upon the scope of the present invention.

An X-ray photoelectron spectrum and nitrogen content of a titanium oxide were measured as follows.

[X-ray photoelectron spectrum]

An X-ray photoelectron spectrum of a titanium oxide was measured using an apparatus of X-ray photoelectronic spectrophotometry (manufactured by RIGAKU CORPORATION, trade name: XPS-7000).

Measurement condition:

X-ray source: MgK$\alpha$, 8 kV and 30 mA,
Narrow scan,
Pass: E = 10 eV,
Step: E = 0.04 eV,
Vacuum degree: $5 \times 10^{-5}$ Pa,
Temperature: room temperature (about 20-25 °C),
The position of Ti2p peak:

Ti2p peak position is corrected with C1s peak position at 284.6 eV.

Holding: Sample to be measured is hold using a carbon tape.

[Nitrogen content]

The nitrogen content of a titanium oxide was measured in a melting method using a nitrogen analyzer (manufactured by HORIBA LTD., trade mane: EMGA-2800).

Example 1

In a 500 ml-volume flask, 22.6.8 g [79.8 mmol] of a titanium tetraisopropoxide (chemical agent; manufactured by Kanto Chemical Co, Ltd.), 90 g [1.4 mol] of an ethylene glycol (chemical agent; manufactured by Kanto Chemical Co, Ltd.) and 110 g [3.4 mol] of a methanol (chemical agent; manufactured by Kanto Chemical Co, Ltd.) were placed and were mixed with one another. Into the resulting mixture, while stirring, 0.0423 g [0.2 mmol] of an anhydrous strontium nitrate (chemical agent; manufactured by Kanto Chemical Co, Ltd.) and 80 g [0.4 mmol] of a citric acid (chemical agent; manufactured by Kanto Chemical Co, Ltd.) were added and were mixed with one another. Stirring was continued until turbidity of the mixture disappeared. Onto a stirrer equipped with a heater, the 500 m1-volume flask containing the above-prepared mixture was placed and was heated, while stirring, to polymerize the titanium tetraisopropoxide therein to obtain a polymer. The heating was continued to remove the methanol. The resulting polymer was carbonized, and then was crushed. The crushed polymer was calcined in air at a temperature of 650 °C for 4 hours, to obtain a white titanium oxide precursor. The titanium oxide precursor was calcined for 10 hours in a gas flow (flow rate: one liter (standard condition)/min, gas temperature: 500 °C, gas concentration: 100 % by volume of ammonia), to obtain a particulate titanium oxide.

The strontium content of the titanium oxide was measured to be 0.25 % by mol in terms of strontium ion based on titanium ion in the titanium oxide. Also, the nitrogen content of the titanium oxide was measured to be 0.14 % by weight in terms of nitrogen element based on the titanium oxide. An X-ray photoelectron spectrum of the titanium oxide was measured. As a result, it was found that the titanium oxide has half-width A of 1.77 eV, half-width B of 1.65 eV and index $X_1$ of 0.93. In the X-ray photoelectron spectrum, there was no peak in the range of from 395 eV to 398 eV, the peak being for nitrogen (N1s).

In a sealed-type glass reaction vessel made of Pyrex (trademark) (diameter: 8 cm, height: 10 cm, volume: about 0.5 L), was placed a 5-cm diameter glass Petri dish on which 0.3 g of photocatalyst consisting of the titanium oxide obtained above was placed. The reaction vessel was filled with a mixed gas having a volume ratio of oxygen to nitrogen of 1/4 (i.e. oxygen : nitrogen = 1:4), was sealed with 13.4 μmol of a 2-butanone and then irradiated with visible light having a wavelength of 430 nm or longer. The irradiation was carried out using an apparatus (made by USHIO INC., trade name: Optical Modulex SX-UI500XQ) having a 500 W xenon lamp as the light source (made by USHIO INC. , trade name: UXL-500SX) equipped with an ultraviolet cutting filter (made by Asahi Techno Glass Co., Ltd., trade name: Y-45) cutting off ultraviolet light having a wavelength of about 430nm or shorter and an infrared light cutting filter (made by USHIO INC., trade name: Supercold Filter) cutting off infrared light having a wavelength of about 830nm or longer. When 2-butanone is decomposed by visible light irradiation, carbon dioxide is generated. The concentration of generated carbon dioxide was measured with passage of time using a photoacoustic multi-gas monitor (type: 1312, made by INNOVA). With the generation rate of carbon dioxide, which was calculated by the change of carbon dioxide concentration, the photocatalytic activity of the obtained photocatalyst (titanium oxide) for 2-butanone was evaluated. The generation rate of carbon dioxide was 11.42 μmol/h per gram of the photocatalyst.

Comparative Example 1

A commercially available titanium oxide (manufactured by Degussa, trade name: P-25) was used as a photocatalyst and was analyzed in the same manners as in Example 1.

As a result, in the visible light irradiation test, the generation rate of carbon dioxide was 1.25 μmol/h per gram of the titanium oxide. The strontium content of the titanium oxide was less than 0.001 % by mol in terms of strontium ion based on titanium ion in the titanium oxide. An X-ray photoelectron spectrum of the titanium oxide was found that the titanium oxide has half-width A of 1.34 eV, half-width B of 1.33 eV and index $X_1$ of 0.99.

The titanium oxide was further analyzed in fluorescent X-ray (XRF) analysis. As a result, each of the contents of Be, Mg, Ca, Ba, Ra, Zn, Cd, Hg and lanthanoid was less than 0.001 % by mol, and the total content of these ions and strontium ion in the titanium oxide was also less than 0.001% by mol, based on titanium ion in the titanium oxide.

**Claims**

1. A titanium oxide comprising a metal element selected from the group IIa elements, group IIb elements and lanthanoids, and having (i) an X-ray photoelectron spectrum which has a peak at a binding energy within the range of from 458 eV to 460 eV and (ii) an index X calculated by the equation:

$$X = B/A$$

of about 0.98 or less, wherein A and B stand for respective half-widths of peaks, which are obtained by the process consisting of the steps of:

(1) measuring an X-ray photoelectron spectrum of the titanium oxide eight times while irradiating with X-rays,
(2) obtaining a half-width, A, of peak at a binding energy within the range of from 458 eV to 460 eV in the integrated spectrum obtained by integrating the first and second X-ray photoelectron spectra, and
(3) obtaining a half-width, B, of peak at a binding energy within the range of from 458 eV to 460 eV in the integrated spectrum obtained by integrating the seventh and eighth X-ray photoelectron spectra.

2. A titanium oxide according to claim 1, which comprises the metal element in an amount of about 0.001 % by mole or more in terms of the metal ion based on titanium ion in the titanium oxide.

3. A titanium oxide according to claim 1 or 2, wherein the metal element is selected from calcium, strontium, zinc and lanthanum.

4. A titanium oxide according to any one of claims 1 to 3, which comprises nitrogen element in an amount of about 0.0001 % by weight or more based on the titanium oxide.

5. A titanium oxide according to claim 4, which comprises nitrogen element in amount of from about 0.01 % by weight to about 2 % by weight based on the titanium oxide.

6. A titanium oxide according to any one of claims 1 to 5, which has an XPS spectrum with no peak at a binding energy of from 395 eV to 398 eV, the binding energy showing an electron state (N1s) of nitrogen.

7. A photocatalyst comprising a titanium oxide as claimed in any one of claims 1 to 6.

8. A photocatalyst coating composition comprising a titanium oxide as claimed in any one of claims 1 to 6 and a solvent.

9. A material coated with a titanium oxide as claimed in any one of claims 1 to 6, a photocatalyst as claimed in claim 7 or a photocatalyst coating composition as claimed in claim 8.

10. Use of a titanium oxide as claimed in any one of claims 1 to 6 as a photocatalyst.

**European Patent Office**

## EUROPEAN SEARCH REPORT

Application Number

EP 02 25 8813

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | JP 10 305230 A (SUMITOMO METAL IND LTD) 17 November 1998 (1998-11-17) | 1-3,7,9, 10 | C01G23/00 B01J35/06 |
| A | * paragraphs [0007],[0010],[0011],[0020]; claims 1-5; example 1 * | 4-6,8 | B01J35/00 |
| X | EP 0 818 239 A (PETROLEUM ENERGY CENTER FOUND) 14 January 1998 (1998-01-14) | 1,7,10 | |
| A | * column 1, line 54-58; claim 1 * | 8,9 | |
| X | EP 1 065 169 A (SUMITOMO CHEMICAL CO) 3 January 2001 (2001-01-03) | 1,3,7-10 | |
| A | * page 2, line 3048; claims 1-11 * * page 6, line 40-43 * | 2-6 | |
| X | RANJIT K T ET AL: "LANTHANIDE OXIDE-DOPED TITANIUM DIOXIDE: EFFECTIVE PHOTOCATALYSTS FOR THE DEGRADATION OF ORGANIC POLLUTANTS" JOURNAL OF MATERIALS SCIENCE, CHAPMAN AND HALL LTD. LONDON, GB, vol. 34, no. 21, 1 November 1999 (1999-11-01), pages 5273-5280, XP000875341 ISSN: 0022-2461 | 1,2,7,10 | |
| A | * page 5275, right-hand column * | 3,8,9 | TECHNICAL FIELDS SEARCHED (Int.Cl.7) C01G B01J |
| X | US 5 624 667 A (MARUO MASATSUYO ET AL) 29 April 1997 (1997-04-29) * example 1 * | 1-3 | |
| A | EP 1 160 202 A (SUMITOMO CHEMICAL CO) 5 December 2001 (2001-12-05) * the whole document * | 1-10 | |

The present search report has been drawn up for all claims

| Place of search | Date of completion of the search | Examiner |
|---|---|---|
| MUNICH | 28 March 2003 | Werner, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 02 25 8813

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2003

| Patent document cited in search report | | Publication date | Patent family member(s) | | Publication date |
|---|---|---|---|---|---|
| JP 10305230 | A | 17-11-1998 | NONE | | |
| EP 0818239 | A | 14-01-1998 | JP | 9262482 A | 07-10-1997 |
| | | | EP | 0818239 A1 | 14-01-1998 |
| | | | US | 6077492 A | 20-06-2000 |
| | | | WO | 9726991 A1 | 31-07-1997 |
| EP 1065169 | A | 03-01-2001 | JP | 2001072419 A | 21-03-2001 |
| | | | AU | 3939100 A | 04-01-2001 |
| | | | CA | 2311980 A1 | 30-12-2000 |
| | | | CN | 1280034 A | 17-01-2001 |
| | | | EP | 1065169 A1 | 03-01-2001 |
| US 5624667 | A | 29-04-1997 | AT | 126252 T | 15-08-1995 |
| | | | DE | 69300353 D1 | 14-09-1995 |
| | | | DE | 69300353 T2 | 22-02-1996 |
| | | | DK | 572914 T3 | 18-12-1995 |
| | | | EP | 0572914 A1 | 08-12-1993 |
| | | | ES | 2075746 T3 | 01-10-1995 |
| | | | JP | 2789157 B2 | 20-08-1998 |
| | | | JP | 6199524 A | 19-07-1994 |
| | | | US | 5480636 A | 02-01-1996 |
| EP 1160202 | A | 05-12-2001 | JP | 2001335321 A | 04-12-2001 |
| | | | AU | 3140501 A | 29-11-2001 |
| | | | CA | 2342523 A1 | 24-11-2001 |
| | | | CN | 1324766 A | 05-12-2001 |
| | | | EP | 1160202 A1 | 05-12-2001 |
| | | | US | 2001056037 A1 | 27-12-2001 |

EPO FORM P0459

For more details about this annex : see Official Journal of the European Patent Office, No. 12/82